# EUROPEAN PATENT APPLICATION

(11) **EP 2 617 877 A1**
(43) Date of publication of application: **24.07.2013**
(21) Application number: 13152266.6
(22) Date of filing: 22.01.2013
(51) Int. Cl.: C25D 3/56, C25D 5/18, C25D 7/00, G11B 5/858, G11B 5/39, H01L 43/10

(54) **Electrodeposition methods of CoFe alloys**

(30) Priority: 23.01.2012 US 201213355699
(71) Applicant: Seagate Technology LLC, Cupertino CA 95014 (US)
(72) Inventor: Gong, Jie, Eden Prairie, MN Minnesota 55347 (US); Tabakovic, Ibro, Edina, MN Minnesota 55435 (US); Riemer, Steve, Minneapolis, MN Minnesota 55406 (US); Kautzky, Michael Christopher, Eagan, MN Minnesota 55122 (US)
(74) Representative: Miller Sturt Kenyon

(57) **Abstract**

Methods of depositing a magnetic material on a substrate, the methods including placing a substrate in an plating solution, the plating solution including an additive selected from malonic acid derivatives; β-diketones and β-diketone derivatives; and C₆C₃ compounds and C₆C₃ compound derivatives; and electrochemically depositing a magnetic material on the substrate by pulsing an electrical current connected to the substrate on and off.

## Description

### BACKGROUND

Magnetic materials can be manufactured using numerous processes. One such process includes electrodeposition. Electrodeposition of magnetic alloys (for example 2.4T CoFe alloys) is typically carried out in the presence of saccharin. Saccharin has been used in industrial electrodeposition of magnetic materials because it can reduce tensile stress and grain size. However, the use of saccharin can lead to detrimental sulfur-induced corrosion. Therefore, there remains a need for other additives for use in electrodeposition of magnetic materials.

### SUMMARY

Disclosed herein is a method of depositing a magnetic material on a substrate, the method including placing a substrate in an plating solution, the plating solution including an additive selected from malonic acid derivatives; β-diketones and β-diketone derivatives; and C₆C₃ compounds and C₆C₃ compound derivatives; and electrochemically depositing a magnetic material on the substrate by pulsing an electrical current connected to the substrate on and off.

Also disclosed is a method of depositing a magnetic material on a substrate, the method including placing a substrate in a plating solution, wherein the plating solution does not contain saccharin; electrochemically depositing a magnetic material on the substrate by pulsing an electrical current connected to the substrate, wherein the electrical current has an on pulse period and an off pulse period, and wherein the off pulse period is at least about 400 milliseconds.

Further disclosed is a method of depositing a magnetic material on a substrate including placing a substrate in a plating solution, the plating solution including not more than about 0.001 M additive, wherein the additive is selected from malonic acid derivatives; β-diketones and β - diketone derivatives; and C₆C₃ compounds and C₆C₃ compound derivatives; electrochemically depositing a magnetic material on the substrate by pulsing an electrical current connected to the substrate, wherein the electrical current has an on pulse period and an off pulse period, and wherein the off pulse period is at least about 400 milliseconds.

According to a first aspect of the present invention, there is provided a method of depositing a magnetic material on a substrate, the method comprising:
placing a substrate in a plating solution, the plating solution comprising:
   an additive selected from the group consisting of:
      malonic acid derivatives;
      β-diketones and β -diketone derivatives; and
      C₆C₃ compounds and C₆C₃ compound derivatives; and
electrochemically depositing a magnetic material on the substrate by pulsing an electrical current connected to the substrate on and off.

It is preferred that the additive is a malonic acid derivative selected from: 2-allyl malonic acid; 2-methyl malonic acid; 2-phenyl malonic acid; 2,2-dimethyl malonic acid; and combinations thereof.

Alternatively, it is preferred that the additive is a β-diketone or a β -diketone derivative selected from: 1,3-indandione; acetylacetone, 2-phenyl 1,3-indandione; 2-pyridylidene-1,3-indandione; 3-pyridylidene-1,3-indandione; 4-pyridylidene-1,3-indandione; 2-furylidene-1,3-indandione; 3-methyl acetylacetone; and combinations thereof.

Alternatively, it is preferred that the additive is a C₆C₃ compound or a C₆C₃ compound derivative selected from: 7-hydroxy coumarin; 4-hydroxy coumarin; 4,7-dihydroxy coumarin; coniferyl alcohol; and combinations thereof.

Preferably, the additive has a concentration of not more than about 0.001 M in the electrolytic solution.

Preferably, the electrolytic solution does not contain saccharin.

Preferably, the magnetic material deposited is CoFe.

Preferably, the CoFe has a magnetic saturation of at least about 2.3 T.

Preferably, the CoFe has a corrosion potential of at least about -400 mV vs. SCE obtained by potentiodynamic curves in 0.1M NaCl solution at pH 5.9.

Preferably, the CoFe has a film stress that is not greater than about 500 MPa.

Preferably, the CoFe has a total concentration of O, S, C, N, H and Cl that is about three times lower than CoFe electrodeposited in the presence of saccharin.

Preferably, the electrical current is off for at least about 400 milliseconds between each on pulse.

Preferably, the electrical current is on for at least about 200 milliseconds between each off pulse.

According to a further aspect of the present invention, there is provided a method of depositing a magnetic material on a substrate, the method comprising:
placing a substrate in a plating solution, wherein the plating solution does not contain saccharin;
electrochemically depositing a magnetic material on the substrate by pulsing an electrical current connected to the substrate, wherein the electrical current has an on pulse period and an off pulse period, and wherein the off pulse period is at least about 400 milliseconds.

It is preferred that the additive is a malonic acid derivative selected from: 2-allyl malonic acid; 2-methyl malonic acid; 2-phenyl malonic acid; 2,2-dimethyl malonic acid; and combinations thereof.

Alternatively, it is preferred that the additive is a β-diketone or a β -diketone derivative selected from: 1,3-indandione; acetylacetone, 2-phenyl 1,3-indandione; 2-pyridylidene-1,3-indandione; 3-pyridylidene-1,3-indandione; 4-pyridylidene-1,3-indandione; 2-furylidene-1,3-indandione; 3-methyl acetylacetone; and combinations thereof.

Alternatively, it is preferred that the additive is a C₆C₃ compound or a C₆C₃ compound derivative selected from: 7-hydroxy coumarin; 4-hydroxy coumarin; 4,7-dihydroxy coumarin; coniferyl alcohol; and combinations thereof.

Preferably, the additive has a concentration of not more than about 0.001 M in the plating solution.

Preferably, the magnetic material deposited is CoFe.

According to a further aspect of the present invention, there is provided a method of depositing a magnetic material on a substrate, the method comprising:
placing a substrate in a plating solution, the plating solution comprising:
   not more than about 0.001 M additive, wherein the additive is selected from the group consisting of:
      malonic acid derivatives;
      β-diketones and β -diketone derivatives; and
      C₆C₃ compounds and C₆C₃ compound derivatives;
electrolytically depositing a magnetic material on the substrate by pulsing an electrical current connected to the substrate, wherein the electrical current has an on pulse period and an off pulse period, and wherein the off pulse period is at least about 400 milliseconds.

### BRIEF DESCRIPTION OF THE DRAWINGS

**FIG. 1** is a schematic diagram illustrating an electrodeposition system.
**FIG. 2** is a schematic depiction of a pulsed current density.
**FIGs. 3A** and **3B** show magnetic hysteresis loops for an electrodeposited CoFe film **(****FIG. 3A****)** and a sputtered CoFe film **(****FIG. 3B****),** both on copper seed layers.
**FIG. 4** shows the saturation magnetization (nW) of electrodeposited CoFe as a function of thickness.
**FIG. 5** shows the magnetic saturation (Tesla) and the tensile stress (MPa) of a CoFe film as a function of the amount of the non-saccharin additive (NSA) in the plating solution.
**FIG. 6** shows potentiodynamic curves of electrodeposited CoFe films from electrolyte solutions with an NSA (top trace) and with saccharin (bottom trace).
**FIGs. 7A** and **7B** show scanning electron microscope (SEM) images of a CoFe write pole electrodeposited from electrolyte solutions with an NSA **(****FIG. 7A****)** and with saccharin **(****FIG. 7B****).**
**FIG. 8** shows tensile stress of an electrodeposited CoFe film as a function of t_{off} time.
**FIGs. 9A, 9B****,** **9C,** and **9D** show atomic force microscopy (AFM) images of a CoFe films deposited at tₒₙ = t_{off} = 10 msec **(****FIG. 9A****);** tₒₙ = toff = 100 msec **(****FIG. 9B****);** tₒₙ = t_{off} = 250 msec **(****FIG. 9C****);** and tₒₙ = toff = 499 msec **(****FIG. 9D****)**
**FIG. 10** shows roughness (RMS in nm) and the magnetic moment (Tesla) as a function of pulse time (tₒₙ=t_{off}).

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

In the following description, reference is made to the accompanying set of drawings that form a part hereof and in which are shown by way of illustration several specific embodiments. It is to be understood that other embodiments are contemplated and may be made without departing from the scope or spirit of the present disclosure. The following detailed description, therefore, is not to be taken in a limiting sense.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the properties sought to be obtained by those skilled in the art utilizing the teachings disclosed herein.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

"Include," "including," or like terms means encompassing but not limited to, that is, including and not exclusive. It should be noted that "top" and "bottom" (or other terms like "upper" and "lower") are utilized strictly for relative descriptions and do not imply any overall orientation of the article in which the described element is located.

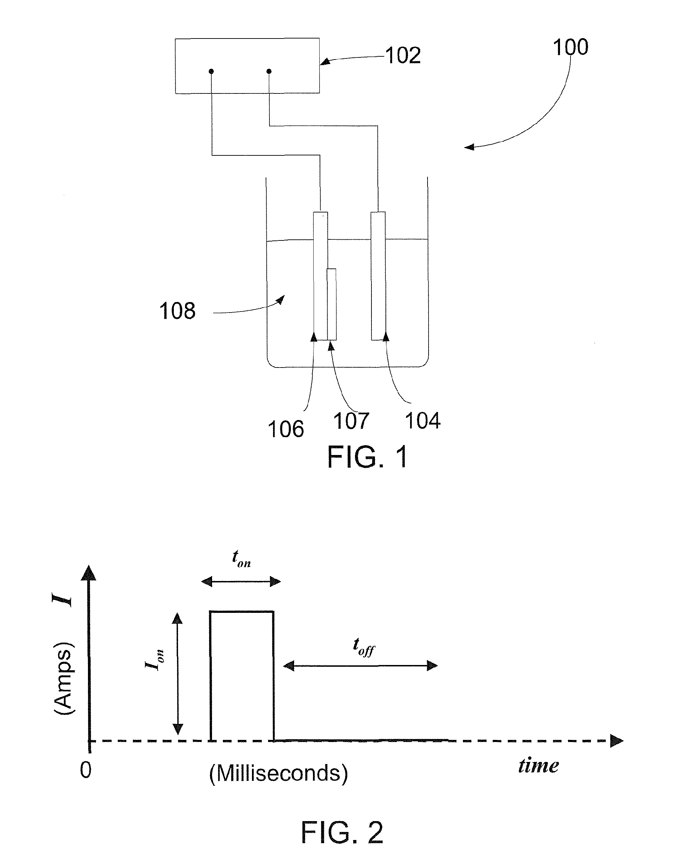

Disclosed herein are methods of depositing a magnetic material on a substrate. Generally, such methods can include steps of placing a substrate in a plating solution and electrochemically depositing a magnetic material on the substrate. The method can be carried out using any electrodeposition system. An exemplary electrodeposition system is depicted in **FIG. 1****.** The electrodeposition system **100** includes an electrodeposition or plating solution **108.** As described further below, the plating solution can include various components, including an additive and the material (for example a metal) used to form a magnetic material. A cathode **106** is generally submerged in the plating solution **108.** An anode **104** may also be submerged in the plating solution (in embodiments, the material of the anode may also be included in the plating solution). A power supply **102** is connected to the anode **104** and the cathode **106.** During use, the power supply **102** can generate a waveform which creates a voltage difference between the anode **104** and the cathode **106.** The voltage difference leads to reduction of the metal ionic species in the plating solution **108** which deposits in the form of a coating on the cathode **106.** The cathode **106** can either be the substrate to be coated or can hold the substrate **107** to be coated (as is pictured in **FIG. 1****).**

Plating solutions utilized herein can include various components. Generally, plating solutions utilized herein are aqueous solutions, although they need not be aqueous. In embodiments, plating solutions can include one or more additives that are referred to herein as non-saccharin additives (also called "NSAs"). It is thought, but not relied upon that NSAs can act as complexing agents for metallic species (for example Co⁺², Ni⁺², Fe⁺², and Fe⁺³) in the plating solution. Non-saccharin additives can include three different types of compounds. In embodiments, plating solutions utilized herein do not contain saccharin.

The first type of NSAs include malonic acid derivatives. In embodiments, the first type of compounds includes malonic acid derivatives. In embodiments, malonic acid derivatives include CX₂(COOH)₂, where at least one X is not a hydrogen (H). In embodiments, X can include from 1 to 8 carbon atoms. In embodiments, X can include from 1 to 6 carbon atoms. In embodiments, X can include alkyl groups, alkenyl groups, alkynyl groups, and cyclic groups for example. In embodiments, X can include alkyl groups having from 1 to 3 carbon atoms; alkenyl groups having from 2 to 4 carbon atoms; and cyclic groups having at least 4 carbon atoms and in embodiments 6 carbon atoms. In embodiments, both X substituents can be alkyl groups, and in embodiments, only one X substituent is an alkyl group, with the other X substituent being a hydrogen (H) atom. Exemplary specific malonic acid derivatives can include for example, 2-allyl malonic acid, 2-methyl malonic acid, 2-phenyl malonic acid, and 2,2-dimethyl malonic acid.

The second type ofNSAs include β-diketones and derivatives of β-diketones. A β-diketone is a compound that includes two ketone groups, which are separated in the compound by a carbon atom (i.e., two ketone groups right next to each other would be an α-diketone; and two ketone groups separated by one carbon atom is a β-diketone). An exemplary formula of a β-diketone can be given as RCOC(R')(R")COR"', wherein R' and R" can be -H or a carbon containing substituent, and R and R"' can be a carbon containing substituent (but not -H) and can be joined together making the compound cyclic. β-diketones can either be straight chained or cyclic. Exemplary β-diketones can include for example, 1,3-indandione, and acetylacetone.

Derivatives of β-diketones can have a substituent or substituents at any carbon atom other than those containing the double bonded oxygen atom. The substituents can be located on the carbon between the two carbonyl (C=O) groups, on any other carbon atom in the molecule, or some combination thereof. In embodiments, the substituents can be located on more than one carbon atom in the molecule. Exemplary substituents can be straight chained or cyclic. Exemplary specific derivatives of β-diketones can include for example 1,3 indandione, 2-phenyl 1,3-indandione, and 2-Aryliden-1,3-indandione derivatives where Aryl can be chosen from phenyl, 2-pyridyl, 3-pyridyl, 4-pyrydyl, and 2-furyl (for example 2-pyridylidene-1,3-indandione, 3-pyridylidene-1,3-indandione, 4-pyridylidene-1,3-indandione, and 2-furylidene-1,3-indandione).

The third type of NSAs include C₆C₃ compounds, where C₆ refers to 6 carbon atoms in an aromatic ring (such as phenyl) and C₃ refers to 3 carbon atoms attached to the aromatic ring. The phenyl portion of the compounds can, but need not be substituted (for example, with carbon containing groups such as alkyls, alkenyls, etc.; or oxygen containing groups such as alcohol groups or ether groups). The three carbon moiety can be connected to the phenyl group at a single carbon or at multiple carbons (i.e., the three carbon moiety can be a straight chained group or can be a cyclic group). The three carbon group can include atoms other than carbon in the backbone (for example, a substituent that included an ether between one carbon atom and two carbon atoms). The three carbon group can, but need not be substituted (for example, with oxygen containing groups such as alcohol groups, ether groups, or carbonyl groups).

Specific exemplary C₆C₃ compounds can include for example 7-hydroxy coumarin and its derivatives (for example 4-hydroxy coumarin, 4,7-dihydroxy coumarin); and coniferyl alcohol (also known as coniferol or 4-(3-hydroxy-1-propenyl)-2-methoxyphenol).

The amount of NSAs in disclosed plating solutions can vary. In embodiments, plating solutions can have not more than 0.002 moles/ liter (molar, also referred to as "M") NSAs. In embodiments, plating solutions can have not more than 0.001 M NSAs. In embodiments, disclosed plating solutions can have amounts ofNSAs from 0.0001 to 0.002 M. In embodiments, disclosed plating solutions can have amounts ofNSAs from 0.0001 to 0.001 M. In embodiments, plating solutions that utilize more than about 0.002 M NSAs can form deposited material with a lower magnetic saturation. In embodiments, increasing the concentration of NSAs from 0.001 M to 0.01 M can cause a gradual decrease of the magnetic saturation of CoFe from 2.4 Tesla (T) to 1.95 T.

Disclosed plating solutions can also contain a source of the material to be electrodeposited. When depositing a metal alloy, a plating solution can contain all of the metal constituents in the alloy. The metal sources are generally ionic species that are dissolved in the plating solution, for example, an aqueous solution. In general, any suitable ionic species can be used. The ionic species may be provided from metal salts, for example. In embodiments where an alloy of cobalt/iron (CoFe) is to be deposited, a plating solution can contain salts of both cobalt and iron. Exemplary sources of cobalt can include for example cobalt sulfate (CoSO₄·7H₂O), and cobalt chloride (CoCl₂ · 6H₂O). Exemplary sources of iron can include for example iron sulfate (FeSO₄·7H₂O), iron chloride, and ferrous ammonium sulfate. In embodiments where an alloy of cobalt/iron/nickel (CoNiFe) is to be deposited, a plating solution can contain salts of cobalt, nickel and iron.

The plating solution can contain various concentrations of the metal species to be deposited. The relative amounts of the metal species in the plating solution can depend at least in part on the desired relative amounts of two metals in the alloy being deposited. In embodiments, the metal species in the plating solution can have a concentration between 0.0001 M to 0.5 M, between 0.001 M to 0.25 M, between 0.01 M to 0.25, or between 0.01 M to 0.1 M.

The plating solution can also contain various species that can be utilized to adjust the pH of the plating solution. Generally, the pH of the plating solution can be from 1 to 6. Plating solutions may also contain components other than those discussed above. For example, plating solutions may contain wetting agents (for example surfactants such as sodium lauryl sulfate (referred to herein as "NaLS")), complexing agents other than the NSAs discussed above (for example, ammonium chloride can function to affect the pH as well as act as a complexing agent), boric acid (H₃BO₃) which can be added to improve morphological and mechanical properties of ferromagnetic films, or combinations thereof.

Disclosed methods also include a step of electrochemically depositing a magnetic material on the substrate. Disclosed plating solutions can be utilized with any electrodeposition system or process. Electrodeposition generally refers to the process of depositing a coating on a substrate by contacting the substrate with a plating solution and flowing electrical current bet5ween two electrodes through the plating solution (due to a difference in electrical potential between the two electrodes). Methods disclosed herein may further include providing an anode, a cathode, a plating solution associated with (or more specifically in contact with) the anode and the cathode, and a power supply connected to the anode and the cathode. In some embodiments, at least one electrode may serve as the substrate to be coated, or may be in contact with the substrate to be coated. During an electrodeposition process, an electrical potential may exist on the substrate to be coated, and changes in applied voltage, current or current density may result in changes to the electrical potential of the substrate.

In embodiments, a direct current (DC) may be utilized to electrodeposit a magnetic material on the substrate. The current may be a constant steady current, or it may be a current that is varied over time. In embodiments, electrodeposition may be done using a pulsed current that includes times when the current is at one value and portions when the current is at a second value. In such embodiments, the current pulses can be described both by the current density and the length of time at that current density. In embodiments, electrodeposition can be described as having the electrical current at a given intensity (Iₒₙ) for a time period (tₒₙ) and at a density of 0 Amps for a time period (t_{off}). This is demonstrated graphically in **FIG. 2****.** The pulse pattern depicted in **FIG. 2** can also be repeated x number of times. In embodiments, the pulse pattern can be carried out for 30 to 60 minutes in order to coat a film having a thickness of 250-500 nanometers.

In embodiments where pulsed electrodeposition at a first current density and 0 current density (off) is utilized, t_{off} can be relatively long, for example at least 400 milliseconds (msec), at least 500 msec, or at least 600 msec; and tₒₙ can be at least 200 msec, at least 300 msec, or at least 400 msec. In embodiments, t_{off} and tₒₙ can be substantially equal, or t_{off} can be greater than tₒₙ.

Disclosed methods can utilize various current densities. In embodiments, disclosed methods can utilize peak current densities, ip (also referred to herein as the "first current density", or Iₒₙ, with the second current density being 0 mA/cm² or off) from 20 to 100 mA/cm², or 10 to 50 mA/cm², or 10 mA/cm2 to 20 mA/cm². In embodiments, a current density of 15 mA/cm² can be utilized.

Disclosed methods and plating solutions can electrodeposit materials that have advantageous properties. Exemplary properties that materials deposited using disclosed methods and plating solutions may have can include for example magnetic properties, corrosion resistance, advantageous levels of impurities, low stress, low roughness, or combinations thereof.

Materials deposited using disclosed methods and plating solutions may exhibit advantageous magnetic properties. One magnetic property that can be considered is magnetic saturation. Magnetic saturation can be measured in Tesla (T) for example. Materials deposited using disclosed methods and plating solutions may have advantageous magnetic saturations. For example a CoFe alloy (it should be noted that the phrase "CoFe alloy", as used herein, can also refer to a CoFeNi alloy that has not more than 3 wt% Ni) deposited using methods or plating solutions disclosed herein may have a magnetic saturation of at least 2.3 T, or at least 2.4 T, or even higher. In embodiments, a CoFe alloy deposited using methods or plating solutions disclosed herein may have a magnetic saturation that is similar or substantially similar to CoFe deposited using sputtering.

Materials deposited using disclosed methods and plating solutions may exhibit advantageous corrosion resistance. Resistance to corrosion can be advantageous because various processes that materials and devices are subjected to can lead to corrosion, therefore materials that resist such corrosion can be advantageously

utilized in such processes. An example of a process that can lead to corrosion includes processing of a slider for a magnetic recording head. Corrosion of magnetic materials can be caused by various processes, including for example sulfur-induced corrosion. Corrosion resistance can be evaluated by measuring the corrosion resistance of the material or structure. In embodiments, the corrosion resistance can be measured in an acidic environment. For example, the corrosion resistance can be measured at a pH of about 6 or more specifically about 5.9. The corrosion resistance can be measured in various solutions, for example in a sodium chloride (NaCl) solution at pH = 5.9. Values of corrosion resistance can be provided versus a reference electrode, for example versus a saturated calomel electrode (referred to as "SCE").

In embodiments, material that is deposited using disclosed methods and plating solutions may have corrosion resistances (corrosion potential) that are at least about -400 mV (i.e., greater than -400 mV) versus a SCE electrode in 0.1 M NaCl solution at pH = 5.9, or at least about -300 mV (i.e., greater than -300 mV) versus a SCE electrode in 0.1 M NaCl solution at pH = 5.9.

Materials deposited using disclosed methods and plating solutions may have less impurities than materials deposited using other methods and plating solutions. Materials that have less impurities can be advantageous because impurities can detrimentally affect the magnetic properties of the materials, can decrease the corrosion resistance, or combinations thereof. In embodiments, light element impurities can be detrimental. Light element impurities can include, for example impurities such as oxygen (O), sulfur (S), carbon (C), nitrogen (N), chloride (Cl), and hydrogen (H). In embodiments, sulfur (S), can lead to a decreased resistance to corrosion because a primary process of corrosion is induced by sulfur. In embodiments, materials deposited using disclosed methods and plating solutions can have lower amounts of at least one light element than materials deposited using saccharin additives. In embodiments, materials deposited using disclosed methods and plating solutions can have lower amounts of sulfur as an impurity than materials deposited using saccharin additives, for example at least 10 times less sulfur, at least 100 times less sulfur, or at least 400 times less sulfur. In embodiments, materials deposited using disclosed methods and plating solutions can have lower amounts of oxygen as an impurity than materials deposited using saccharin additives, for example at least 2 times less oxygen. In embodiments, material deposited using disclosed methods or plating solution may have a total amount of light elements (O, S, C, N, Cl and H) that is at least two times lower than a material deposited using saccharin additives, or at least three times lower.

Materials deposited using disclosed methods and plating solutions may have advantageous levels of stress, such as for example tensile stress. In embodiments, materials deposited using disclosed methods and plating solutions and specifically pulsed deposition with long t_{off} times can have advantageous levels of stress. Materials with excessive stress can cause (i) an increase in the magnetoelastic anisotropy, which makes CoFe films magnetically harder; (ii) delamination of thicker films; and (iii) formation of "nano-cracks" or voids in the deposited material due to induced thermal stress during later processing. It is thought that the adsorption/desorption of hydrogen (H) during electrodeposition of the material is one mechanism for the formation of stress.

Methods disclosed herein that utilize relatively long t_{off} times can lead to the deposition of materials that have relatively low stress. It is thought, but not relied upon that even though NSAs are not as good at relieving stress as saccharin, disclosed methods that utilize relatively long t_{off} times can lower the stress of the deposited material. A possible explanation for why long t_{off} provides lower stress is discussed below, and may generally be due to a hydrogen adsorption/desorption stress evolution mechanism which involves:
1) Adsorption of hydrogen when the current is on (tₒₙ):

   M + H⁺ + e → M-H (at the grain boundaries) [1]
2) Desorption of hydrogen (t_{off}):

   M-H + H⁺ + e → M + H₂ (M=CoFe) [2]

Materials deposited using disclosed methods and plating solutions may have advantageous levels of tensile stress for example. In embodiments, materials deposited using disclosed methods and plating solutions can have tensile stress that is not greater than 500 MPa, or not greater than 400 MPa for example.

Materials deposited using disclosed methods and plating solutions may have advantageous morphology. The morphology of a material can include the surface topography and surface roughness for example. Surface topography, surface roughness, or both can be an indication of the porosity of the material. Higher porosities, which can be indicated by exaggerated topography or relatively high surface roughness, can lead to lower magnetic moments (emu/cc), especially in CoFe films. Surface topography and/or surface roughness can be characterized using atomic force microscopy (AFM) which can provide measurements such as the root mean squared (RMS) of the roughness. In embodiments, materials deposited using disclosed methods and plating solutions can have an RMS of not greater than 40 nm, not greater than 20 nm, or not greater than 10 nm, at a film thickness of 300nm.

In embodiments, a long pulse period (the pulse period = tₒₙ + t_{off}), especially a long t_{off} can be effective in reducing the surface roughness. In embodiments, when keeping tₒₙ constant, increasing t_{off} effectively reduces the surface roughness of a deposited material. As the duty cycle remains the same (the duty cycle = tₒₙ/(tₒₙ+t_{off})) longer pulse periods can reduce roughness and increase the magnetic moment of the deposited material.

In embodiments, disclosed methods and plating solutions can be utilized to deposit material that have various combinations of the properties discussed above (as well as other properties not discussed herein). In embodiments, deposited materials can have advantageous magnetic properties, advantageous corrosion resistance, advantageous levels of light element impurities, advantageous levels of stress, advantageous morphology (roughness), or combinations thereof. In embodiments, deposited materials can have advantageous magnetic properties, advantageous corrosion resistance, and advantageous levels of stress. In embodiments, deposited materials can have advantageous magnetic properties, advantageous corrosion resistance, advantageous levels of stress, and advantageous levels of light element impurities. In embodiments, deposited materials can have advantageous magnetic properties, advantageous corrosion resistance, advantageous levels of stress, advantageous levels of light element impurities, and advantageous morphology (roughness).

Disclosed methods and plating solutions can be used to deposit magnetic materials for any reason or application. In embodiments, disclosed methods and plating solutions can be used to deposit magnetic materials for magnetic read/write heads, or more specifically for the write pole of a magnetic read/write head. Disclosed methods and plating solutions can be used to deposit magnetic materials for any application that can utilize low impuritiy levels and reduced, minimized, or no sulfur induced corrosion.

### EXAMPLES

While the present disclosure is not so limited, an appreciation of various aspects of the disclosure will be gained through a discussion of the examples provided below.

### EXAMPLE 1 - Exemplary Plating Solutions

Exemplary plating solutions containing the components seen in Table 1 below can be formed.

**Table 1**

| **Compound** | **Concentration (Moles/Liter)** |
|---|---|
| Ammonium Chloride (NH₄Cl) | 0.3 |
| Boric Acid (H₃BO₃) | 0.4 |
| Cobalt Sulfate (CoSO₄·7H₂O) | 0.039-0.042 |
| Nickel Sulfate (NiSO₄·6H₂O) | <0.0266 |
| Iron Sulfate (FeSO₄·7H₂O) | 0.1-0.11 |
| NSA | 0.0001-0.002 |
| Sodium lauryl sulfate (NaLS) | ∼ 0.1 (grams/liter) |

Such exemplary plating solutions can generally be utilized along with a nickel (Ni) anode to deposit a CoFe material having 62 ± 3 wt% Fe, < 2.5 wt% Ni, and the balance Co. Such a material can have a magnetic moment of 2.4 ± 0.05 T.

### EXAMPLE 2 - Exemplary Plating Solution

An exemplary plating solution containing the components seen in Table 2 below was formed. The plating solution had a pH of 2.0 ± 0.02.

**Table 2**

| **Compound** | **Concentration (Moles/Liter)** |
|---|---|
| Ammonium Chloride (NH₄Cl) | 0.3 |
| Boric Acid (H₃BO₃) | 0.4 |
| Cobalt Sulfate (CoSO₄·7H₂O) | 0.03 |
| Nickel Sulfate (NiSO₄·6H₂O) | 0.02 |
| Iron Sulfate (FeSO₄·7H₂O) | 0.1 |
| 2-methyl malonic acid | 0.0002 |
| Sodium lauryl sulfate (NaLS) | 0.05 (grams/liter) |

### EXAMPLE 3 - Magnetic properties

The plating solution of Example 2 was utilized along with a nickel (Ni) anode, an average current density of 6mA/cm², a tₒₙ of 300ms, and a t_{off} of 500ms to deposit 500 nm thick Co₃₇Fe₆₁Ni₂ on a substrate with a pre-deposited copper (Cu) seed layer. The magnetic hysteresis loop of the material was captured using a Mesa loop tracer (Shb Instruments, Inc.) at a field of - 1000e to 1000e at 10Hz. The magnetic hysteresis loop of a 500 nm sputtered Co₃₈Fe₆₂ film on a copper (Cu) seed layer was also captured as above. The sputtered Co₃₈Fe₆₂ film was utilized for comparison and calibration of the magnetic moment of the electrodeposited Co₃₇Fe₆₁Ni₂ film.

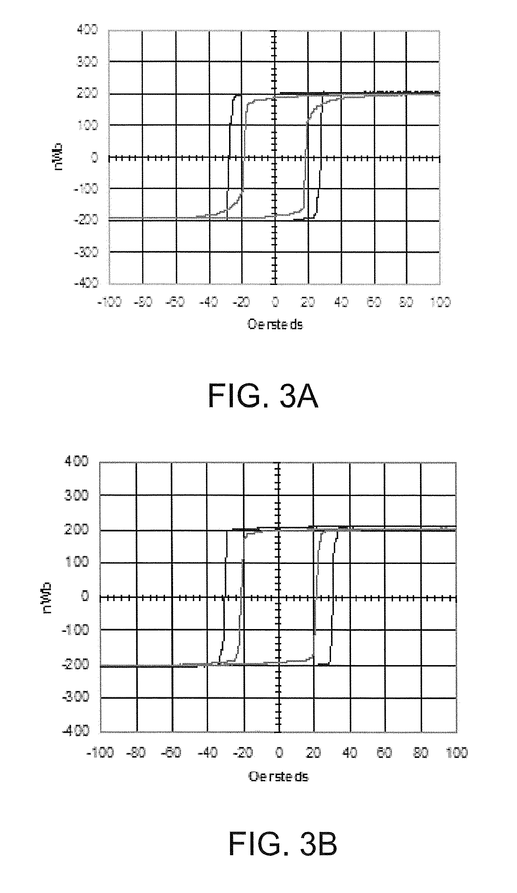

**FIG. 3A** shows the magnetic hysteresis loop of the electrodeposited Co₃₇Fe₆₁Ni₂ film and **FIG. 3B** shows the magnetic hysteresis loop of the sputtered Co₃₈Fe₆₂ film. From a comparison of the two loops, it can be seen that the electrodeposited Co₃₇Fe₆₁Ni₂ film had magnetic behavior that was comparable with the sputtered Co₃₈Fe₆₂ film.

### EXAMPLE 4 - Magnetic properties

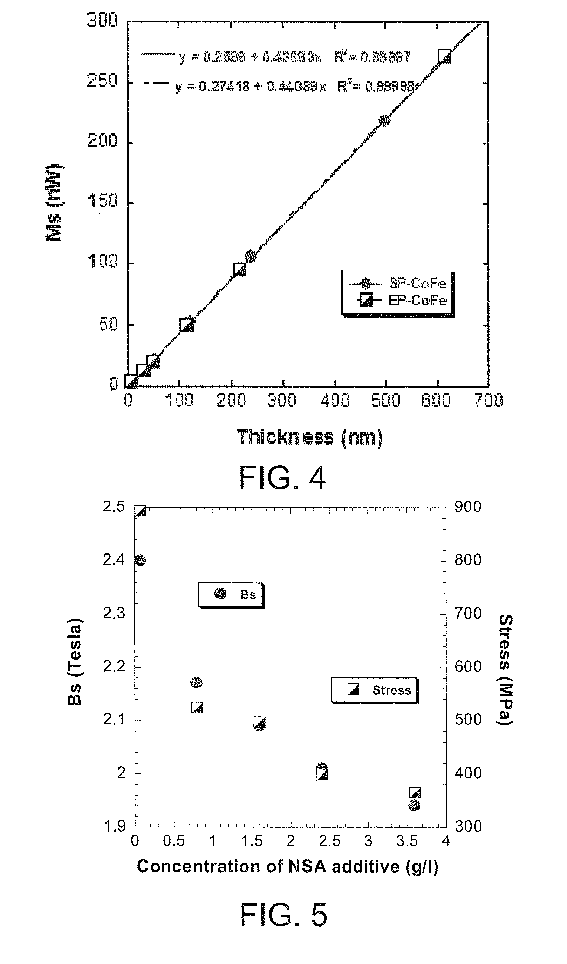

Co₃₇Fe₆₁Ni₂ having different thicknesses were deposited similarly to Example 3, except that different total times of deposition were utilized. The magnetic moment of electrodeposited Co₃₇Fe₆₁Ni₂ was evaluated by checking the saturation magnetization (nW) of the different thicknesses of the electrodeposited Co₃₇Fe₆₁Ni₂ on the copper seed layer and comparing them with sputtered CoFe with different thicknesses. The comparison is seen graphically in **FIG. 4****.** The slope of the magnetization vs. thickness curve can be an indication of moment. It can be concluded that the electrodeposited Co₃₇Fe₆₁Ni₂ film exhibits a similar moment to that of sputtered CoFe, which is 2.4 T.

### EXAMPLE 5 - Magnetic properties as a function of NSA concentration

The effect of the concentration of the NSA, in this example 2-methyl malonic acid, was evaluated by varying the concentration of the NSA from 0.001 M to 0.01 M. Other than the different concentrations of the NSA (2-methyl malonic acid), the other components of the plating solution are given in Example 2.

As seen in **FIG. 5****,** the gradual increase in the concentration of 2-methyl malonic acid from 0.001 M to 0.01 M (0.75 g/L = 0.0064 M 2-methyl malonic acid; 1.5 g/L = 0.013 M 2-methyl malonic acid; 2.4 g/L = 0.02 M 2-methyl malonic acid; and 3.6 g/L = 0.03 M 2-methyl malonic acid) brings about a gradual decrease of the magnetic saturation from 2.4T CoFe to 1.95T CoFe. It can also be seen from **FIG. 5** that the tensile stress of the resulting electrodeposited material increases as the concentration of the NSA additive decreases.

### EXAMPLE 6 - Corrosion Resistance

The corrosion resistance of a layer of Co₃₇Fe₆₁Ni₂ electrodeposited with 3-methyl malonic acid was compared to the corrosion resistance of a layer of Co₃₇Fe₆₁Ni₂ electrodeposited with saccharin. The NSA Co₃₇Fe₆₁Ni₂ was deposited as discussed in Example 3. The saccharin Co₃₇Fe₆₁Ni₂ was deposited using a plating solution that contained the components given in Table 3 below.

**Table 3**

| **Compound** | **Concentration (Moles/Liter)** |
|---|---|
| NH₄Cl | 0.3 |
| H₃BO₃ | 0.4 |
| CoSO₄.7H₂O | 0.053 |
| FeSO₄.7H₂O | 0.088 |
| Sodium-Saccharin | 0.8 (grams/liter) |
| Sodium lauryl sulfate (NaLS) | 0.1 (grams/liter) |
| pH | 2.0 |

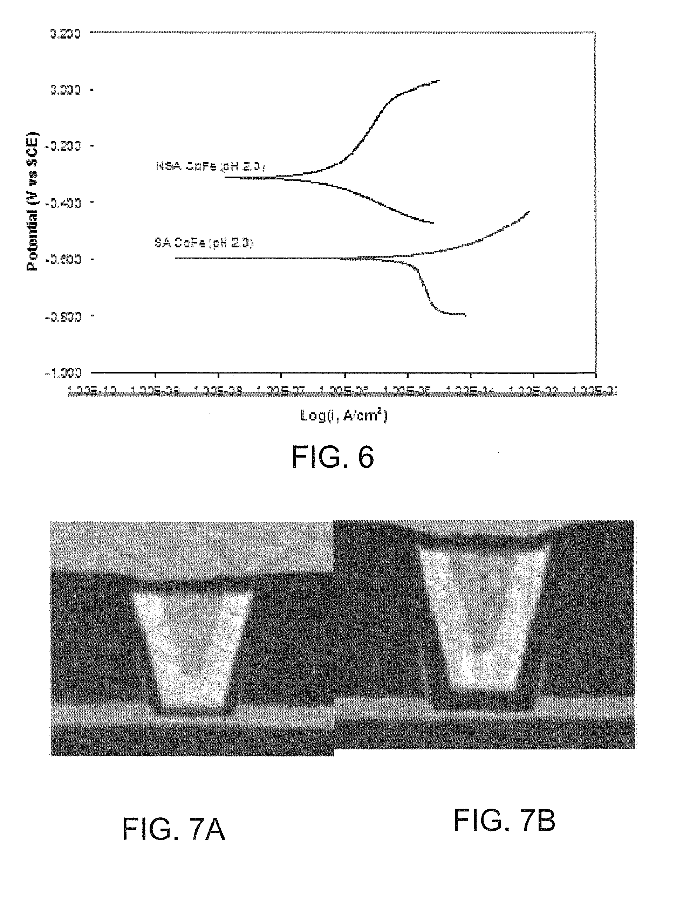

**FIG. 6** shows anodic potentiodynamic curves of the NSA layer and the saccharin layer in 0.1M NaCl solution at pH 5.9 versus a standard calomel electrode (SCE). A comparison of the two curves shows the superior corrosion resistant properties of the NSA electrodeposited film compared with the saccharin deposited film.

**Table 4** below shows corrosion properties of Co₄₀Fe₆₀ obtained in the presence of a non-saccharin additive, 2-methyl malonic acid and saccharin electrodeposited from the plating solution of Example 2 at a pH 2.0.

**Table 4**

| **Alloy** | **E_{corr} (pH 5.9) (mV vs.SCE)** | **I_{corr} (pH 5.9) (µA/cm²)** | **E_{corr} (pH 3.0) (mV vs.SCE)** | **I_{corr} (pH 3.0) (µA/cm²)** |
|---|---|---|---|---|
| **NSA CoFe** | -300 | 0.2 | -450 | 20 |
| **SA CoFe** | -600 | 20 | -600 | 40 |

As seen from Table 4, the CoFe electrodeposited in the presence of the NSA has better corrosion resistance at both pH 5.9 and 3.0.

### EXAMPLE 7 - Voids and Nano-cracks

**FIGs. 7A** and **7B** show write poles with the same composition of Co₃₆Fe₆₂Ni₂ electrodeposited using 2-methyl malonic acid **(****FIG. 7A****)** and saccharin **(****FIG. 7B****).** The write pole in **FIG. 7B** shows "voids" or "nano-cracks" (the black dots in the center of **FIG. 7B****)** while the write pole in **FIG. 7A** is compact without any voids or corrosion.

### EXAMPLE 8 - Impurities

The concentration of light elements in CoFe films deposited using a NSA additive and a saccharin additive were analyzed using secondary ion mass spectroscopy (SIMS). The films were deposited similarly to Example 6 above. The results are shown in Table 5 below.

**Table 5**

| **Additive** | **Concentration of light elements in CoFe Films (Atomic %)** | | | | | | |
|---|---|---|---|---|---|---|---|
| | O | S | C | N | Cl | H | Total |
| 2-methyl malonic acid | 0.134 | 0.000978 | 0.0159 | 0.00161 | 0.00863 | 0.423 | 0.598 |
| Saccharin | 0.323 | 0.46 | 0.013 | 0.092 | 0.46 | 0.69 | 2.038 |

The purity of the CoFe film deposited using the NSA additive is much higher than that of the film deposited using the saccharin. Further x-ray photoelectron spectroscopy (XPS) studies of the saccharin deposited CoFe films indicated that the major sulfur-containing compounds were FeS and CoS, which are a known cause of sulfur-induced corrosion, which as seen above in Example 6 results in poor corrosion resistance in saccharin formed CoFe films compared to NSA CoFe films.

### EXAMPLE 9 - Effect of T_{off} on Stress

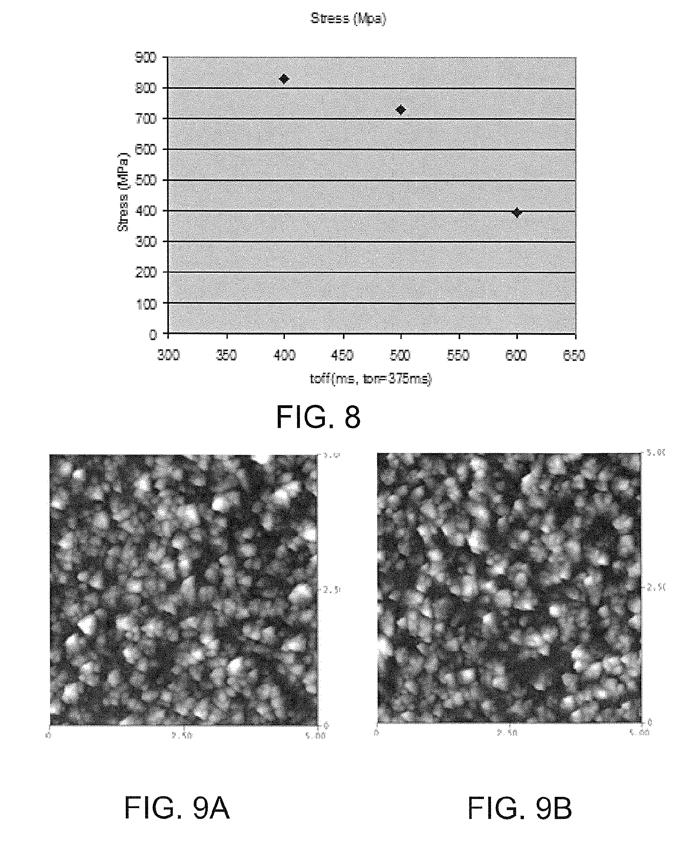

The effect of the length of t_{off} was investigated by varying t_{off}. As seen in **FIG. 8****,** the film stress was reduced by applying longer t_{off} times, while keeping the tₒₙ constant.

### EXAMPLE 10 - Morphology

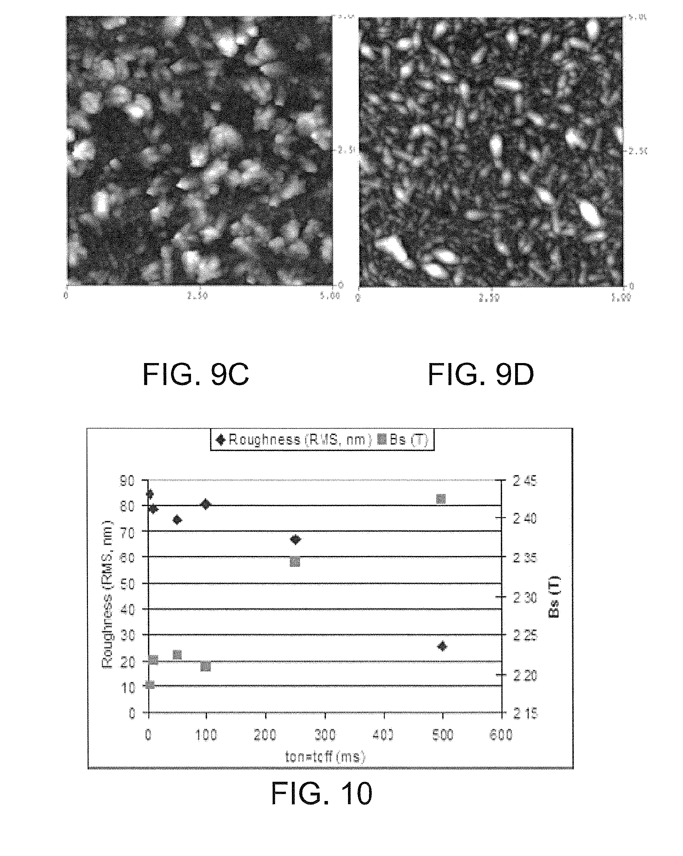

The effect of tₒₙ, t_{off}, and various other related parameters on the roughness were investigated. Surface topography or roughness is an indication of film porosity, and hence lower magnetic moment (emu/cc) would be a result of large roughness. In addition, small roughness and grain size generally account for better magnetics for CoFe thin films. **FIGs. 9A, 9B****,** **9C,** and **9D** show images from AFM of CoFe films electrodeposited as discussed in Example 2, with the exception of the noted tₒₙ and t_{off}. **FIG. 9A** utilized tₒₙ = t_{off} = 10 milliseconds (msec); **FIG. 9B** utilized tₒₙ = t_{off} = 100 msec; **FIG. 9C** utilized tₒₙ = t_{off} = 250 msec; and **FIG. 9D** utilized tₒₙ = t_{off} = 499 msec. A long pulse period (tₒₙ + t_{off}), and especially a long time off, was found to be the most effective in reducing the surface roughness. When keeping the duty cycle the same (tₒₙ/(tₒₙ+t_{off})), longer pulse periods (tₒₙ + t_{off}) can reduce roughness and increase the magnetic moment **(****FIG. 10). FIG. 10** shows that longer pulse periods effectively reduces the surface roughness and increases the magnetic moment.

Thus, embodiments of ELECTRODEPOSITION METHODS OF CoFe ALLOYS are disclosed. The implementations described above and other implementations are within the scope of the following claims. One skilled in the art will appreciate that the present disclosure can be practiced with embodiments other than those disclosed. The disclosed embodiments are presented for purposes of illustration and not limitation.

## Claims

1. A method of depositing a magnetic material on a substrate, the method comprising:
placing a substrate (107) in a plating solution (108), the plating solution comprising:
an additive selected from the group consisting of:
malonic acid derivatives;
β-diketones and β-diketone derivatives; and
C₆C₃ compounds and C₆C₃ compound derivatives; and
electrochemically depositing a magnetic material on the substrate by pulsing an electrical current connected to the substrate on and off.

2. The method according to claim 1, wherein the electrolytic solution does not contain saccharin.

3. The method according to claim 1 or claim 2, wherein the electrical current is off for at least about 400 milliseconds between each on pulse.

4. A method of depositing a magnetic material on a substrate, the method comprising:
placing a substrate (107) in a plating solution (108), wherein the plating solution does not contain saccharin;
electrochemically depositing a magnetic material on the substrate by pulsing an electrical current connected to the substrate, wherein the electrical current has an on pulse period and an off pulse period, and wherein the off pulse period is at least about 400 milliseconds.

5. The method according to any one of the preceding claims, wherein the additive is a malonic acid derivative selected from: 2-allyl malonic acid; 2-methyl malonic acid; 2-phenyl malonic acid; 2,2-dimethyl malonic acid; and combinations thereof.

6. The method according to any one claims 1 to 4, wherein the additive is a β-diketone or a β -diketone derivative selected from: 1,3-indandione; acetylacetone, 2-phenyl 1,3-indandione; 2-pyridylidene-1,3-indandione; 3-pyridylidene-1,3-indandione; 4-pyridylidene-1,3-indandione; 2-furylidene-1,3-indandione; 3-methyl acetylacetone; and combinations thereof.

7. The method according to any one claims 1 to 4, wherein the additive is a C₆C₃ compound or a C₆C₃ compound derivative selected from: 7-hydroxy coumarin; 4-hydroxy coumarin; 4,7-dihydroxy coumarin; coniferyl alcohol; and combinations thereof.

8. The method according to any one of the preceding claims, wherein the additive has a concentration of not more than about 0.001 M in the plating solution.

9. The method according to any one of the preceding claims, wherein the magnetic material deposited is CoFe.

10. The method according to claim 9, wherein the CoFe has a magnetic saturation of at least about 2.3 T.

11. The method according to claim 9 or claim 10, wherein the CoFe has a corrosion potential of at least about -400 mV vs. SCE obtained by potentiodynamic curves in 0.1M NaCl solution at pH 5.9.

12. The method according to any one of claims 9 to 11, wherein the CoFe has a film stress that is not greater than about 500 MPa.

13. The method according to any one of claims 9 to 12, wherein the CoFe has a total concentration of O, S, C, N, H and Cl that is about three times lower than CoFe electrodeposited in the presence of saccharin.

14. The method according to any one of the preceding claims, wherein the electrical current is on for at least about 200 milliseconds between each off pulse.
